# EUROPEAN PATENT APPLICATION

(11) **EP 3 566 624 A1**
(43) Date of publication of application: **13.11.2019**
(21) Application number: 18171326.4
(22) Date of filing: 08.05.2018
(51) Int. Cl.: A47J 36/32, A47J 27/00, A23L 5/10, A23L 19/00, A23L 33/00

(54) **IMPROVING FOOD FOLATE BIOAVAILABILITY USING DEDICATED HEATING METHOD**

(71) Applicant: Koninklijke Philips N.V., 5656 AE Eindhoven (NL)
(72) Inventor: CHEN, Yun, 5656 AE Eindhoven (NL); TAN, Jingwei, 5656 AE Eindhoven (NL); TANG, Jiani, 5656 AE Eindhoven (NL); SU, Guangming, 5656 AE Eindhoven (NL)
(74) Representative: de Haan, Poul Erik

(57) **Abstract**

The invention provides a device (1) for treating a food material, the device (1) comprising:
- a container (100) comprising a container cavity (110) for hosting the food material;
- a temperature control system (200) for controlling a temperature of contents of the container cavity (110);
- a blending system (300) comprising a blending element (310) and an actuator (320) for actuating the blending element (310), wherein the blending element (310) is configured in the container cavity (110);
- a food type determining system (500) for providing food material type input information of the food material to a control system (400); and
- the control system (400) configured to control based on the food material type input information and according to a predefined relation between a type of food material and a heating schedule related to the type of food material the temperature control system (200), wherein the heating schedule at least includes a first heating stage at a first heating temperature during a first heating time, wherein the first heating temperature is selected from the range of 65-80 °C, and wherein the first heating time is at least 5 minutes.

## Description

### FIELD OF THE INVENTION

The invention relates to a device for treating a food material, as well as to a method for treating food material, wherein e.g. such device can be applied.

### BACKGROUND OF THE INVENTION

Apparatus and methods for treating food materials are known from the art. WO2013/035029, for instance, describes a method of preparing puree including: providing pieces of raw material in a blending unit; heating the pieces of raw material; and blending the pieces of raw material when the pieces of raw material have been heated to a first temperature, wherein during the blending step, the heating step is controlled such that the temperature of the pieces of raw material being blended is between the first temperature and a second temperature, the second temperature being higher than the first temperature. The main advantage of this invention is that more high-temperature-sensitive nutrients can be preserved. This document also describes a device for preparing puree, which comprises: a base module; a blending unit arranged on the base module for blending pieces of raw material used for preparing the puree; and a heating unit arranged within or outside the blending unit for heating the pieces of raw material; wherein the device further comprises a control unit for controlling the blending unit to blend the pieces of raw material when the pieces of raw material have been heated to a first temperature, and for controlling the heating unit in such a manner that the temperature of the pieces of raw material being blended is between the first temperature and a second temperature, the second temperature being higher than the first temperature.

### SUMMARY OF THE INVENTION

Nutrients benefits and health benefits from fresh food ingredients are very attractive points for humans. For different populations, there may be (different) specific recommended nutrient intakes. For instance, for elder people, they need to consume more calcium from daily diets or supplements due to metabolism changes of human body; for pregnant women and preparation for pregnancy women, they are encouraged to consume additional 400 µg folate in a day, and at least for about 6 months. Women with insufficient folate intakes are at increased risk of giving birth to infants with neural tube defects (NTDs). Furthermore, megaloblastic anemia, which is characterized by large, abnormally nucleated erythrocytes, is the primary clinical sign of a deficiency of folate or vitamin B 12. Symptoms of megaloblastic anemia include weakness, fatigue, difficulty concentrating, irritability, headache, heart palpitations, and shortness of breath.

The term "Folate" is used to name the many forms of a vitamin-namely folic acid and its congeners, including tetrahydrofolic acid (the activated form of the vitamin), methyltetrahydrofolate, methenyltetrahydrofolate, and folinic acid. Other names may include vitamin B9, vitamin Bc, vitamin M, folacin, and pteroyl-L-glutamate. Instead of the term "folate", also the term "food folate" may be applied.

Therefore, there is a desire to provide food products with an increased folate content or wherein the folate becomes (more) bioavailable. Hence, it is an aspect of the invention to provide an alternative food preparation device and/or an alternative food preparation method, which preferably further at least partly obviate one or more of above-described drawbacks. The present invention may have as object to overcome or ameliorate at least one of the disadvantages of the prior art, or to provide a useful alternative.

In a first aspect, the invention provides a device for treating (such as preparing) a food material, the device comprising: (i) a container comprising a container cavity ("cavity") for hosting the food material; (ii) a temperature control system for controlling a temperature of contents of the container cavity; (iii) optionally a blending system ("blender") comprising a blending element and an actuator for actuating the blending element, wherein the blending element is configured in the container cavity; (iv) a food type determining system for providing food material type input information of the food material to a control system; and (v) the control system ("controller") configured to control based on the food material type input information and according to a predefined relation between a type of food material and a heating schedule related to the type of food material the temperature control system, wherein the heating schedule at least includes a first heating stage at a first heating temperature during a first heating time, wherein in specific embodiments the first heating temperature is selected from the range of 60-85 °C, even more especially selected from the range of 65-80 °C, and wherein in (the same) specific embodiments the first heating time is at least 2 minutes, even more especially at least 5 minutes.

It surprisingly appears that when such device with such heating schedule is applied, especially when the heating stage is combined and/or succeeded by a blending stage, the bioavailability of folate may substantially be increased in e.g. vegetables or fruit. Hence, food material treated in this way, especially the folate material therein, may be more easier absorbed (by e.g. a human) than food material only treated at higher temperatures (without a substantial heating stage of at least about 2 minutes first heating time, even more especially at least about 5 minutes), at the herein indicated first heating temperature range of the first heating stage or lower temperatures, lower than the first heating temperature range of the first heating stage.

As indicated above, the invention provides amongst others a device for treating a food material.

The device may be a device that is able to heat at a temperature at the first heating temperature for the herein indicated first heating time. Further, the device especially heats the food material via steam. Yet further, the device especially also includes a blending function for blending the food material, during and/or after the heating stage.

Especially, the device comprises (i) a container comprising a container cavity for hosting the food material. The container is especially a closeable container, including e.g. a lid or other closure element, such that the container can be closed. The lid or closure element may close an entrance of the cavity during the first heating stage, and optionally during other stage as well. Especially, during processing of the food material, the container may be closed. The container may include a pressure relief valve.

The device may further include a temperature control system for controlling a temperature of contents of the container cavity. The contents in the container cavity can be heated via one or more different options. For instance, a cavity wall can (directly) be heated, a heating element can be available in the cavity, and/or a heating medium (such as air or steam) can be provided in the cavity. Hence, heating may be executed on the basis of one or more of a resistive heater (or ohmic heater), a radiation heater, an electromagnetic heater, an IR heater, an air heater, a steaming heater, etc.. From nutrient benefit's angle, it appears that steaming may provide the best results in terms of increasing folate bioavailability.

The temperature of the contents can e.g. be controlled by providing a cavity wall at the desired temperature, and/or by providing a heating element in the cavity a the desired temperature, and/or by providing a heating medium at the desired temperature, and keeping the cavity wall and/or heating element and/or heating medium at the desired temperature, i.e. at a temperature of at least 60 °C, such as especially in the range of 60-85 °C.

Alternatively, the cavity wall and/or heating element in the cavity and/or heating medium may be provided at a temperature while monitoring the temperature of the food material. Then, the temperature of the food material is controlled as function of the temperature of the food material. In such embodiments, a sensor may be available in the cavity, for sensing the temperature of the food material. Therefore, in specific embodiments the device may further comprising a temperature sensor configured to sense a temperature of contents of the container cavity, wherein the control system is configured to control the temperature control system as function of a temperature sensor signal of the temperature sensor.

A good way to control the temperature of the food product but also a good way to make folate bioaccessible appears to be the use of water vapor at elevated temperature, which may herein also be indicated as "steam". Hence, the water vapor may also be indicated as a mist at elevated temperature or water vapor at elevated temperature (but especially at a temperature lower than 100 °C). The vapor may thus comprise steam (but especially at a temperature lower than 100 °C). Hence, the vapor may include droplets of water.

The steam may have a better effect on the (increase of the) bioavailability of the folate but may also lead to faster process in getting the folate bioavailable. The steam, when entering the cavity may essentially have a temperature of at least 60 °C, even more especially the herein indicated temperature. Hence, the water vapor or steam may in embodiments have a temperature selected from the range of 60-85 °C, even more especially selected from the range of 65-80 °C, more especially, the water vapor or steam entering the cavity has such temperature selected from the range of 60-85 °C, even more especially selected from the range of 65-80 °C. Therefore, in embodiments the temperature control system may comprise a water vapor generator configured to generate a vapor at elevated temperature, wherein the vapor (at elevated temperature) comprises water, for heating the contents of the container cavity (with a vapor at such temperature especially of at least 60 °C, such as especially selected from the range of 65-80 °C). Yet further, the device may further comprise a reservoir for containing water, wherein the reservoir is functionally coupled with the water vapor generator.

The container may include a container wall with one or more (small) inlets (e.g. equivalent cross-sectional diameter selected from the range of 0.1-5 mm, though other options may be possible) for introduction into the container cavity of the vapor at elevated temperature. Especially, there may be a plurality of inlets in over at least part of the total surface area of the container wall of the cavity. Here, the closure may be part of the container wall enclosing the container cavity when the cavity is in the closed state. Hence, vapor may in embodiments also (only) introduced via (a one or more (small) inlet in) a closure.

It appears that these reduced temperatures are preferred, as normal steaming at about 100 °C does not lead to the desired (increase in) bioavailability of the folate (and may also have other undesired effects dependent upon the type of food material); in contrast the bioavailability of folate when heating fresh food material at higher temperatures may not increase or even decrease. Hence, especially fresh food material is par-heated. However, a subsequent heating stage at more elevated temperatures, after the first heating (and optional blending stage) is herein not excluded.

Especially, the device may further comprise a blending system. It appears that blending of the heated material may further improve the bioavailability of folate. Blending may be done during at least part of the first heating stage and/or after the first heating stage. The blending system comprises a blending element, which is actually used to blend the (heated) food material. Further, the blending system comprises an actuator for actuating the blending element. In embodiments, the actuator and blending element may be detachably coupled or may be configured detachably connectable. The blending element may be configured in the container cavity. The actuator is especially configured outside the cavity. Especially, the blending system is controlled by the control system (see also below). The term "blending element" may also refer to a plurality of identical or different blending elements.

In specific embodiments, the actuator is controllable. Here, the term "controllable refers to actuation option between no actuation and maximum actuation. For instance, the blending element may be a rotational element, and the rotation speed may be controllable and/or the torque applied to the rotational element may be controllable. Especially, the control system (see below) may be configured to control the actuator. For instance, in specific embodiments the control system may be configured to control the actuator in dependence of one or more of the food material type input information and the amount of food material.

The amount of food material may in embodiments be weighed by the device, such as in embodiments wherein the device may have a functionality of weighing the contents of the container (or the entire container). Hence, in embodiments the device may be configured to weigh the container or the contents of the container. For instance, in embodiments the device may include a (weighing) scale. Alternatively or additionally, the amount of food material may be provided as input information to a user interface. In these ways the control system may be configured to control the actuator in dependence of the amount of food material.

The device further may comprise a food type determining system for providing food material type input information of the food material to a control system (see further also below). Especially, the food type determining system comprises one or more of (i) a sensor system for determining the type of food material and generating the food material type input information, and (ii) a user interface for providing the food material type input information. The sensor can be a sensor at an entrance of the cavity, which can be used to register which type of food material is introduced in the cavity. The sensor can also be external from the cavity, and can be used to scan the food material when e.g. manually arranged in front of the sensor. The user interface may e.g. be a graphical user interface. The user interface can be remote, such as a wireless device that may communicate with the device and/or such user interface may be integrated in the device.

Herein, the term "sensor" may also refer to a plurality of (different) sensors.

Further, the device may include or may be functionally coupled to a control system.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element.

The controlling of the element can be done with a control system. The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems.

The term "controlling mode" especially indicates a selectable (or selected) set of conditions that are imposed to the device to provide a specific food or a specific degree of doneness of such food. Hence, in embodiments there may be a plurality of different controlling modes.

Especially, the control system is configured to control based on the food material type input information and according to a predefined relation between a type of food material and a heating schedule related to the type of food material the temperature control system. Hence, the control system includes a library or has access to a library wherein a heating schedule is available indicating at least a first heating temperature (and first heating time) related to a specific type of food material. Such heating schedule may also include information and/or rules defining the first heating temperature (and first heating time) for (predetermined) combinations of two or more different types of food materials, optionally based on the relative amounts of these two or more different types of food materials. The heating schedule includes for each different type of food ((control) information on) a first heating stage at a first heating temperature during a first heating time. Hence, when the control system receives from the food type determining system the food type material input information, the device can start to treat - according to the herein described method - the food material in the cavity.

Especially, the first heating temperature is selected from the range of 60-85 °C, even more especially selected from the range of 65-80 °C. The first heating temperature may depend upon the type of food material. A lower temperature or a higher temperature than indicated may not lead to a substantial increase in the bioavailability of folate in the food material. Best results may be obtained with a first heating temperature of about 65-75 °C.

Further, the first heating time should not be too short. For instance, a heating to 100 °C where only a few seconds, or e.g. at about minute, the food materials is at a temperature within the first heating temperature range may not be enough (or even be contra productive). Especially, the first heating time is at least 2 minutes, even more especially at least 5 minutes, such as at least 10 minutes. Hence, in embodiments the first heating time is selected from the range of 5-45 minutes, such as especially 5-30 minutes, like at least 10 minutes. Longer times may not be desirable, as this may lead to undesired changes in the food material.

As indicated above, the control system may control the temperature control system, based on a heating schedule. In specific embodiments, the control system may further be controlled to control the blending system, whereby in addition to a heating stage also a blending stage may be controlled. Therefore, in specific embodiments the control system may further be configured to control based on the food material type input information and according to a predefined relation between a type of food material and a heating and blending schedule related to the type of food material the temperature control system and the blending system, wherein the heating and blending schedule at least includes the first heating stage and a blending stage.

Hence, the control system may include a library or has access to a library wherein a heating schedule and blending schedule is available including the first heating stage indicating at least a first heating temperature (and first heating time) and a blending stage related to a specific type of food material. During the blending stage, one or more blending parameters, such the blending time, the extent of blending, and a blending scheme in relation to the heating stage may be controlled. Hence, one or more of the blending time, extend of blending, and blending scheme may also be included in the library (in addition to the first heating temperature (and first heating time)). The extent of blending may e.g. refer to one or more or rotational speed of blending element and torque on blending element. The term "blending scheme" especially refers to one or more of (i) a time wherein the blending start relative to the heating stage, such as during or after, and (ii) a scheme when there are two or more blending periods with one or more of different blending period times and extend of blending, wherein optionally between a set of two blending periods there may be non-blending period.

Such heating and blending schedule may also include information and/or rules defining the first heating temperature (and first heating time) and blending parameters for (predetermined) combinations of two or more different types of food materials, optionally based on the relative amounts of these two or more different types of food materials. The heating and blending schedule includes for each different type of food a first heating stage at a first heating temperature during a first heating time and a blending stage. Hence, when the control system receives from the food type determining system the food type material input information, the device can start to process - according to the herein described method - the food material in the cavity.

In specific embodiments, in the heating and blending schedule the blending stage is configured following on the first heating stage.

The term "heating stage" may also refer to a plurality of different heating stages, such as a heating at a lower temperature within the herein indicated first temperature range and a heating at a higher temperature within the herein indicated first temperature range. Likewise, the term "blending stage" may also refer to a plurality of different blending stages, such as a first blending stage wherein less shear is introduced in the food material in the container and a second blending stage wherein more shear is introduced in the food material in the container.

The control system is especially functionally coupled with the temperature control system. Further, the control system may especially functionally be coupled with the blending system. Yet further, the control system is especially functionally coupled with a user interface. The control system is especially functionally coupled with the food type determining system. The control system is especially functionally coupled with one or more sensors (when such one or more sensors are available).

A single device with a housing may include the temperature control system, the blending system, the food type determining system and the control system. Such device may also include the container. The container may be configured detachable to (the remainder of) the device, e.g. for cleaning purposes.

In specific embodiments, the device may comprise a modular system. This may be convenient for hygienic purposes but this may also be convenient for other purposes (see also below). In specific embodiments, the modular system may comprise a base unit and a container unit. The container unit may be configured on the base unit in different ways. Or more in general, the base unit and container unit can be configured relative to each other in different configurations. Especially, the base unit may at least comprise the actuator. The container unit may at least comprise the container. Hence, in specific embodiments the base unit and the container unit can detachably be associated to each other. In specific embodiments, the container may be configured detachable to the container unit, e.g. for cleaning purposes.

Especially, in embodiments the base unit may comprise the water vapor generator. For instance, this may allow embodiments wherein the modular system is configurable in a first functional configuration, wherein the water vapor generator is functionally coupled to the container unit, and in a second functional configuration, different from the first functional configuration, wherein the actuator is functionally coupled to the blending element. For instance, the first and second configuration may be obtained by a rotation of one of the elements relative to the other of the elements. This rotation may effectively be along a vertical axis or along a horizontal axis. For instance, in embodiments the container unit may be configured in a first configuration and a second configuration where one of these is an upside down configuration of the other. This may e.g. useful in view of improving nutrient bioavailability (food folate). The first configuration is especially used for activating enzyme activity; The second configuration is especially used for making enzyme contact with food folate as intimate as possible. The set of these two configurations could, and the process wherein these configurations are consecutively applied enhances the availability of food folate.

As indicated above, the device may be used for the herein described method, though other devices may also be used for the herein described method. Hence, the device may at least include the functionality to execute the herein described method. However, in further embodiments the device may also be configured to execute one or more alternative processes. For instance, the device may also include a controlling mode wherein heating only takes place at a lower temperature or only at a higher temperature. However, in embodiments in at least a controlling mode, the control system will have the device execute the herein described method. As indicated herein, the device may execute an action in a mode. The term "mode" may also be indicated as "controlling mode". This does not exclude that the device may also be adapted for providing another controlling mode, or a plurality of other controlling modes. However, the control system is adapted to provide at least a controlling mode. Would other modes be available, the choice of such modes may especially be executed via a user interface, though other options, like executing a mode in dependence of a sensor signal or a (time) scheme may also be possible.

In a further aspect, the invention provides a method for treating a food material, the method comprising heating the food material according to a predefined relation between a type of food material and a heating schedule related to the type of food material, wherein the heating of the food material at least includes a first heating stage at a first heating temperature during a first heating time, wherein in specific embodiments the first heating temperature is selected from the range of 60-85 °C, especially 65-80 °C, especially 65-75 °C, and wherein in specific embodiments the first heating time is at least 2 minutes, even more especially at least 5 minutes, such as in the range of 5-45 minutes, like especially 5-30 minutes. In embodiments, the first heating time may be selected from the range of 10-30 minutes. In specific embodiments, the first heating time is selected from the range of 10-20 minutes.

As indicated above, in embodiments the first heating stage comprises generating a vapor at elevated temperature comprising water for heating the food material at the first heating temperature. The liquid that is used for providing the steam or vapor at elevated temperature may have a pH selected from the range of 4.5-9. Hence, especially water may be used as (sole) source for the water vapor. Especially, the water has a pH selected from the range of 4.5-9. Water at such pH values may facilitate bioavailability of the folate without essential detrimental aspects on the food material.

The above indicated embodiments in relation to the device may also apply in relation to the method as described herein.

Hence, in embodiments the method may (also) comprise heating and blending the food material according to a predefined relation between a type of food material and a heating and blending schedule related to the type of food material, wherein the method at least includes the first heating stage and a blending stage, wherein the blending stage follows the first heating stage.

Further, as indicated above a modular device may be used. Therefore, in embodiments the method may comprise using a modular system. Such modular system may comprise (i) a base unit at least comprising an actuator for blending the food material with a blending element, and (ii) a container unit at least comprising a container with a container cavity for hosting the food material. As indicated above, especially the container cavity may (further) comprise the blending element. In specific embodiments, the base unit and the container unit can detachably be associated to each other. In yet further specific embodiments, the base unit may further comprise a water vapor generator for generating a vapor at elevated temperature comprising water for heating the food material.

In embodiments, the modular system may also include two or more different configurations, e.g. for executing different parts of the heating and blending schedule. For instance, in embodiments the method may further comprise configuring the modular system in a first functional configuration, wherein the water vapor generator is functionally coupled to the container unit, for heating the food material, followed by configuring the modular system in a second functional configuration, different from the first functional configuration, wherein the actuator is functionally coupled to the blending element, for blending the food material.

In embodiments, the change from one configuration to the other may be controlled by the control system. For instance, the device may include an actuator, especially different from the actuator for the blending system, configured to change the device from one configuration in the other configuration (and vice versa). In yet other embodiments, the change from the one configuration to the other may be done manually. In some embodiments, only a manual action may be used to change from one configuration in the other.

Especially, the food material comprises one or more of a vegetable and (a piece of) fruit.

For instance, a vegetable may include one or more of artichokes (globe), artichokes (Jerusalem), Asian greens, asparagus, beans (such as soy beans), beets, beetroot, broccoli, Brussels sprouts, cabbages, capsicums, carrots, cauliflower, celeriac, celery, chili peppers, chokos, collards, courgettes, scaloppini, cucumber, eggplant, Escarole or endive, fennel, fresh herbs, garlic, ginger, kale, cavolo nero, kohlrabi, kumara, leeks, lettuce, melons, microgreens, mushrooms, okra, onions, parsnips, peas, potatoes, potatoes, purple (taewa), puha, pumpkins, radishes, rhubarb, salad greens, shallots, silver beet, spinach, spring onions, sprouted beans, sprouts, seeds, swedes, sweet corn, taro, tomatoes, turnips, watercress, witloof, and yams. Examples of fruit may include one or more of an apple, avocado, papaya, and orange, hence, in specific embodiments the food material may include one or more of soybeans, okran, spinach, artichoke, turnips (such as turnip greens), collards, broccoli, asparagus, sprouts, such as Brussels sprouts, lettuce, escarole or endive, beets, potato, spinach, apple, avocado, papaya and orange. The term "food material" may also refer to a plurality of different food materials. Especially, the term "food material" refers to a fresh food material. The food material may especially be pieces of fresh food material, such as beans or chopped broccoli, etc.. Hence, especially fresh food materials may be used, as they may be good sources of food folate. Especially, green leafy vegetables are good food folate sources. In specific embodiments, one or more of asparagus, okra, spinach, artichoke, turnip greens, broccoli, Brussels sprouts, lettuce, and beets may be applied.

After, and thus especially not before, the first heating stage, a further heating stage may follow at more elevated temperatures, such as a cooking stage. Therefore, in embodiments the method may further comprise a cooking stage at a second heating temperature selected from the range of at least 95 °C.

In this way, food material may be prepared.

According to a further aspect a kitchen appliance for treating, such as for preparing, food is proposed, comprising a device as defined herein. The device may be part of or the functionality of the device as described herein may be executed with a household blender, a baby feeding blender, a soup maker, a multi-cooker, etc..

As indicated above, the device may be used to execute the method such as described herein. However, the method may also be executed with other devices. Hence, in yet a further aspect the invention also provides a computer program product, optionally implemented on a record carrier (storage medium), which when run on a computer executes the method as described herein (see below) with a device as described herein.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically depicts an embodiment of the device;
Figs. 2a-2b schematically depict further embodiments of the device; and
Figs. 3a-3b schematically depict some aspects of embodiments of the method and of controlling the device.

The schematic drawings are not necessarily to scale.

### DETAILED DESCRIPTION OF THE EMBODIMENTS

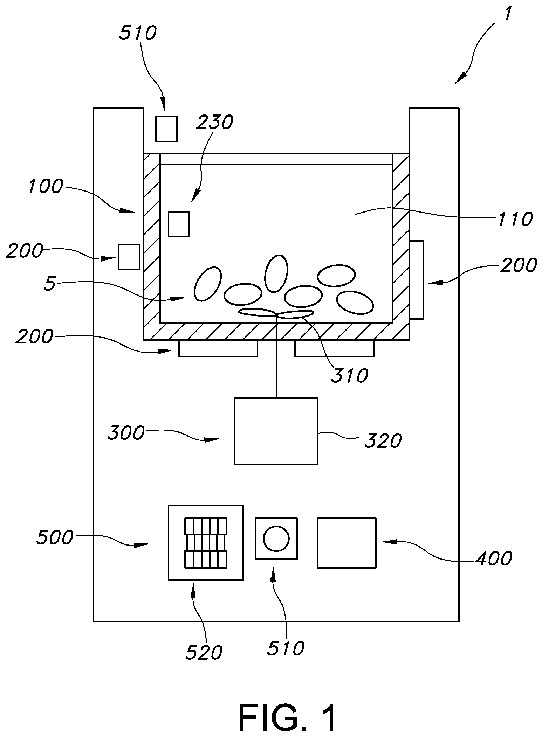

Fig. 1 schematically depicts an embodiment of a device 1 for treating a food material. The device 1 comprises a container 100, such as a steel container, comprising a container cavity 110 for hosting the food material. The food material, indicated with reference 5, may comprise a combination of different food materials or may be a single type of food material, such as broccoli. Here, the container cavity 110 is closed with a closure. The closure can be opened to introduce material into the cavity 110 or remove material from the cavity 110.

The device 1 further comprises a temperature control system 200 for controlling a temperature of contents of the container cavity 110.

Yet, the embodiment of the device as schematically depicted further comprises a blending system 300 comprising a blending element 310 and an actuator 320 for actuating the blending element 310. The blending element 310, such as a rotatable blending element, is configured in the container cavity 110.

The device 1 further comprises a food type determining system 500 for providing food material type input information of the food material to a control system 400. Here, by way of example a sensor 510 is available, which may monitor introduction of food material into the cavity 110. Such sensor may be used to determine the food type, and thereby provide or let provide the food material type input information. Alternatively or additionally, such sensor may be configured elsewhere, as also shown with the sensor - by way of example - adjacent to a user interface (element), indicated with reference 520. Also such user interface may be used to provide the food type input information by a human. Also weight of the material or number of portions, etc., may be introduced as information.

The device 1 further comprises a control system 400, which is especially configured to control based on the food material type input information and according to a predefined relation between a type of food material and a heating schedule related to the type of food material the temperature control system 200. As indicated above, the heating schedule at least includes a first heating stage at a first heating temperature during a first heating time.

Yet further, the device 1 may further comprise a temperature sensor 230 configured to sense a temperature of contents of the container cavity 110. In such embodiments, the control system 400 may be configured to control the temperature control system 200 as function of a temperature sensor signal of the temperature sensor 230.

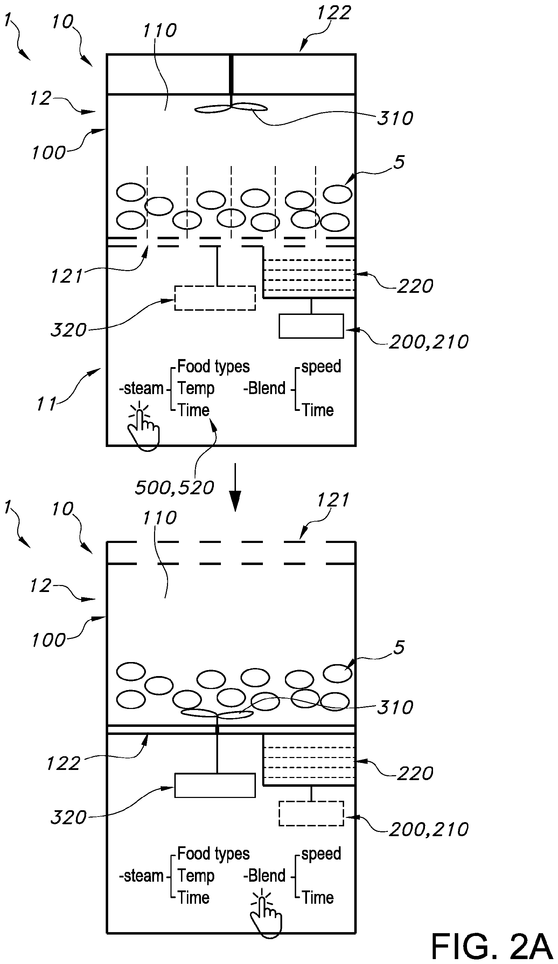

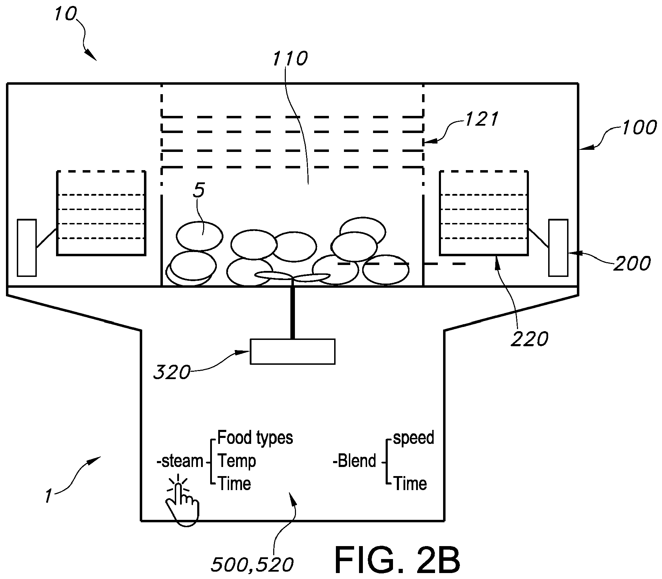

Figs. 2a and 2b schematically depict some further embodiments of the device, 1. Both embodiments include a temperature control system 200 comprising a water vapor generator 210 configured to generate a vapor at elevated temperature comprising water for heating the contents of the container cavity 110. In such embodiments, the device may further comprise a reservoir 220 for containing water. Such the reservoir 220 is functionally coupled with the water vapor generator 210. Alternatively or additionally, the water vapor generator may be in (direct) fluid contact with a source of water, such as a water tap.

Especially Fig. 2a schematically depicts an embodiment of the device 1 comprising a modular system 10, wherein the modular system 10 comprises a base unit 11 at least comprising the actuator 320, and a container unit 12 at least comprising the container 100. In this schematically depicted embodiment, the base unit 11 and the container unit 12 can detachably be associated to each other. Here, the base unit 11 comprises the water vapor generator 210. The modular system 10 is configurable in a first functional configuration, wherein the water vapor generator 210 is functionally coupled to the container unit 12, and in a second functional configuration, different from the first functional configuration, wherein the actuator 320 is functionally coupled to the blending element 310. By rotating the container unit 12 along a horizontal axis and over 180°, the two configurations may essentially be contained.

Fig. 2b schematically depicts an embodiment wherein the heating may be done sideways, with water vapor entering the cavity 110 via a sidewall of the cavity. One or more reservoirs 220 may be available.

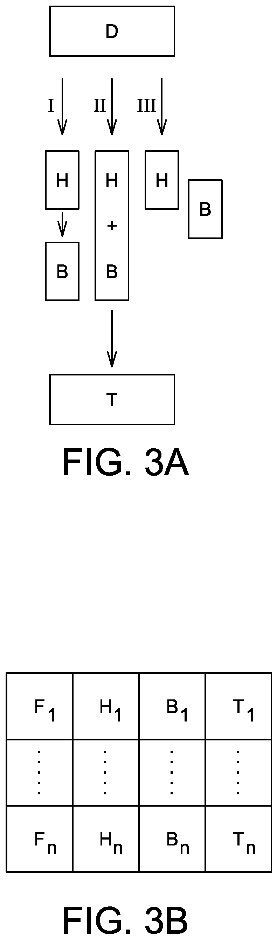

Fig. 3a very schematically depicts some possible schemes, wherein reference D refers to a determining stage, reference H refers to a heating stage, reference B refers to a blending stage and reference T refers to a further treatment stage. The further treatment stage may be optional. As shown in Fig. 3, blending may be done after the heating stage (I), during the heating stage (II) or during part of the heating stage (III).

Fig. 3b very schematically depicts an embodiment of a schedule, such as a library, wherein food materials or food material combinations, indicated with F1-Fn are combined with heating stage parameters, optionally blending stage parameters and optionally further treatment stage parameters. Such parameters may include one or more of time, temperature, etc..

Based on the principle above, features of this invention may include a heating module, which may essentially be composed of a heater and a temperature sensor. The heater may heat the fresh ingredients to 65∼80 °C. Especially, about 70°C is as folate may become (more) bioavailable, whereas vitamin C may not essentially be destructed. The heater used is variable, such as, resistive heater, ray heater, electromagnetic heater, and IR heater so on. From nutrient benefit's angle, steaming is the preferable method. The temperature sensor may be used for online monitoring heating temperature based on the requirements.

Further, the device may use during execution of the method a pre-set control algorithm function. For instance, a user could select/input the food types for treatment in user interface, then a pre-set control algorithm is communicatively coupled to a controller arranged to control the pre-heating temperature and time. The pre-set algorithm maybe hard-coded into the controller, or, the controller may be coupled to a data storage device, e.g. any suitable type of memory, in which the pre-set algorithm is stored, e.g. in the form of a lookup table from which the controller may determine the pre-heating time given the different food types. The recommended pre-heating time really depends on the detailed food types and amounts, the range could be from about 10∼20 mins.

Yet further, the heating module may include a blending/mixing module. Such module may in embodiments be composed of a blade assembly and a base. The blade assembly could be detachable, and includes a blade affixed to an end of a blade shaft, and a gear system engages a blade system. The driving shaft engages the gear system and causes the blade assembly to rotate in operation. The base may contain electrical motor and driving shaft. In addition, a user interface for selecting different programs may be included.

Further, the device may include a water tank or water reservoir, such water tank could contain tap water, or electrolyzed water of pH 4.5∼9 could be placed in the tank.

The device comprises a container. Fresh ingredients may be put into the container and the ingredients may be steamed. In embodiments, the container wall and/or bottom part of container may include fine holes for passing through steam generated. Given the different embodiments, the device with the bottom part within fine holes (see e.g. Fig. 2a) could be detachable.

Hence, in embodiments the invention provides a par-heating method wherein folate becomes (more) bioavailable in a food material.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to". The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A device (1) for treating a food material, the device (1) comprising:
- a container (100) comprising a container cavity (110) for hosting the food material;
- a temperature control system (200) for controlling a temperature of contents of the container cavity (110);
- a blending system (300) comprising a blending element (310) and an actuator (320) for actuating the blending element (310), wherein the blending element (310) is configured in the container cavity (110);
- a food type determining system (500) for providing food material type input information of the food material to a control system (400); and
- the control system (400) configured to control the temperature control system (200) based on the food material type input information and according to a predefined relation between a type of food material and a heating schedule related to the type of food material, wherein the heating schedule at least includes a first heating stage at a first heating temperature during a first heating time, wherein the first heating temperature is selected from the range of 65-80 °C, and wherein the first heating time is at least 5 minutes.

2. The device (1) according to claim 1, wherein the control system (400) is configured to control the temperature control system (200) and the blending system (300) based on the food material type input information and according to a predefined relation between a type of food material and a heating and blending schedule related to the type of food material, wherein the heating and blending schedule at least includes the first heating stage and a blending stage.

3. The device according to claim 2, wherein, in the heating and blending schedule, the blending stage is configured following on the first heating stage.

4. The device (1) according to any one of the preceding claims, wherein the actuator (320) is controllable, and wherein the control system (400) is configured to control the actuator (320) in dependence of one or more of the food material type input information and the amount of food material.

5. The device (1) according to any one of the preceding claims, wherein the temperature control system (200) comprises a water vapor generator (210) configured to generate a vapor at elevated temperature comprising water for heating the contents of the container cavity (110), wherein the device further comprises a reservoir (220) for containing water, wherein the reservoir (220) is functionally coupled with the water vapor generator (210).

6. The device (1) according to any one of the preceding claims, further comprising a temperature sensor (230) configured to sense a temperature of contents of the container cavity (110), wherein the control system (400) is configured to control the temperature control system (200) as function of a temperature sensor signal of the temperature sensor (230), and wherein further the first heating time is selected from the range of 5-30 minutes.

7. The device (1) according to any one of the preceding claims, wherein the food type determining system (500) comprises one or more of (i) a sensor system (510) for determining the type of food material and generating the food material type input information, and (ii) a user interface (520) for providing the food material type input information.

8. The device (1) according to any one of the preceding claims, comprising a modular system (10), wherein the modular system (10) comprises (i) a base unit (11) at least comprising the actuator (320), and (ii) a container unit (12) at least comprising the container (100), wherein the base unit (11) and the container unit (12) can detachably be associated to each other.

9. The device (1) according to claim 8 in as far as dependent from claim 5, wherein the base unit (11) comprises the water vapor generator (210), wherein the modular system (10) is configurable in a first functional configuration, wherein the water vapor generator (210) is functionally coupled to the container unit (12), and in a second functional configuration, different from the first functional configuration, wherein the actuator (320) is functionally coupled to the blending element (310).

10. A method for treating a food material (5), the method comprising heating the food material (5) according to a predefined relation between a type of food material and a heating schedule related to the type of food material, wherein the heating of the food material (5) at least includes a first heating stage at a first heating temperature during a first heating time, wherein the first heating temperature is selected from the range of 65-80 °C, and wherein the first heating time is at least 5 minutes.

11. The method according to claim 10, wherein the first heating stage comprises generating a vapor at elevated temperature comprising water for heating the food material (5) at the first heating temperature, wherein the first heating time is selected from the range of 5-30 minutes, and wherein the water has a pH selected from the range of 4.5-9.

12. The method according to any one of claims 10-11, the method comprising heating and blending the food material (5) according to a predefined relation between a type of food material and a heating and blending schedule related to the type of food material, wherein the method at least includes the first heating stage and a blending stage, wherein the blending stage follows the first heating stage, and wherein the first heating time is selected from the range of 10-20 minutes.

13. The method according to any one of claims 10-12, wherein the method comprises using a modular system (10) comprising (i) a base unit (11) at least comprising an actuator (320) for blending the food material (5) with a blending element (310), and (ii) a container unit (12) at least comprising a container (100) with a container cavity (110) for hosting the food material (5), wherein the container cavity (110) further comprises the blending element (310), wherein the base unit (11) and the container unit (12) can detachably be associated to each other, wherein the base unit (11) further comprises a water vapor generator (210) for generating a vapor at elevated temperature comprising water for heating the food material (5), wherein the method further comprises configuring the modular system (10) in a first functional configuration, wherein the water vapor generator (210) is functionally coupled to the container unit (12), for heating the food material (5), followed by configuring the modular system (10) in a second functional configuration, different from the first functional configuration, wherein the actuator (320) is functionally coupled to the blending element (310), for blending the food material (5).

14. The method according to any one of claims 10-13, wherein the food material (5) comprises one or more of vegetables and fruit.

15. The method according to any one of claims 10-14, further comprising a cooking stage at a second heating temperature selected from the range of at least 95 °C.
